# EUROPEAN PATENT APPLICATION

(11) **EP 3 592 044 A1**
(43) Date of publication of application: **08.01.2020**
(21) Application number: 17908205.2
(22) Date of filing: 03.05.2017
(51) Int. Cl.: H04W 52/02, H04W 36/00

(54) **SIGNAL MEASUREMENT METHOD AND RELATED EQUIPMENT**

(71) Applicant: Huawei Technologies Co., Ltd., Longgang District Shenzhen, Guangdong 518129 (CN)
(72) Inventor: XUE, Jiantao, Shenzhen Guangdong 518129 (CN); HAN, Jing, Shenzhen Guangdong 518129 (CN)
(74) Representative: Pfenning, Meinig & Partner mbB
(86) International application number: PCT/CN2017/082854
(87) International publication number: WO 2018/201318

(57) **Abstract**

Embodiments of this application provide a signal measurement method and a related device. The signal measurement method includes: when performing signal measurement, determining, by a terminal, whether a signal bandwidth of a signal sent by a base station is switched; if determining that the signal bandwidth of the sent signal is switched, measuring, by the terminal, a switched signal bandwidth or a switched frame structure of the sent signal; and sending, by the terminal, a measurement report to the base station according to a preset rule or a measurement indication of the base station, to realize measuring a signal with a changing bandwidth in a cellular mobile communications network.

## Description

### TECHNICAL FIELD

This application relates to the field of wireless network technologies, and in particular, to a signal measurement method and a related device.

### BACKGROUND

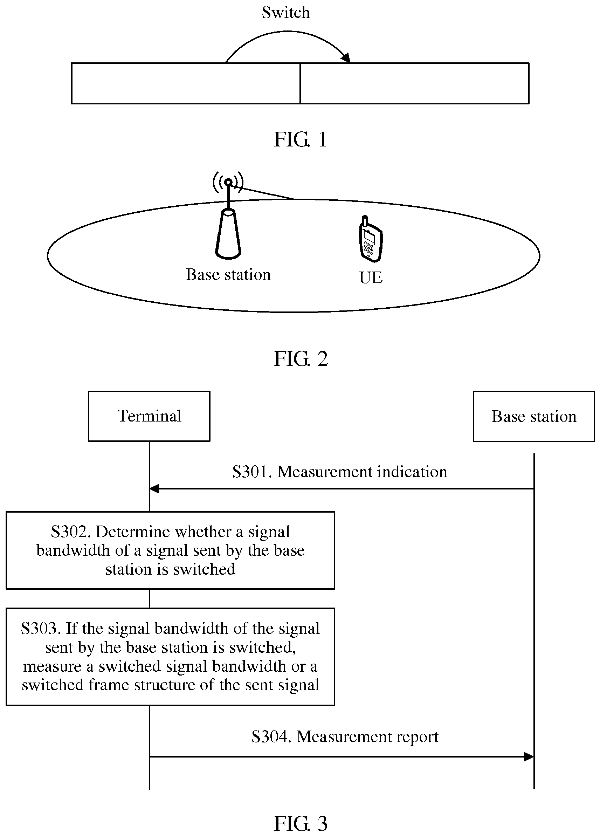

In a long term evolution (Long Term Evolution, LTE) system, a measurement bandwidth of user equipment (User Equipment, UE) for a communications system is constant. As shown in FIG. 1, a signal sent by a base station is switched, a signal bandwidth (Bandwidth, BW) remains unchanged, and UE measures, based on a fixed frame structure, a subcarrier spacing, and a measurement bandwidth, a signal sent by a base station. However, in a 5G cellular mobile communications network (New Radio, NR) system, a signal bandwidth of a sent signal may change, for example, change from 20 MHz to 5 MHz. In view of energy conservation and the like, in a solution in the prior art, a measurement manner based on a fixed frame structure, a subcarrier spacing, and a measurement bandwidth is inapplicable to a current communications network. Therefore, it is necessary to provide a signal measurement method based on a changing bandwidth.

### SUMMARY

This application provides a signal measurement method and a related device, to resolve a technical problem in the prior art that a signal with a changing bandwidth cannot be measured in a cellular mobile communications network.

According to a first aspect, an embodiment of this application provides a signal measurement method, including:
when performing signal measurement, first determining, by a terminal, whether a signal bandwidth of a signal sent by a base station is switched; if determining that the signal bandwidth of the sent signal is switched, then measuring, by the terminal, a switched signal bandwidth or a switched frame structure of the sent signal according to a preset rule or a measurement indication of the base station; and finally sending, by the terminal, a measurement report to the base station after completing measurement, to realize measuring a signal with a changing bandwidth in a cellular mobile communications network.

In a possible design, the terminal adjusts a radio frequency bandwidth of the terminal; and measures the switched signal bandwidth or the switched frame structure of the sent signal based on an adjusted radio frequency bandwidth.

In another possible design, in an adjustment gap, the terminal actively adjusts the radio frequency bandwidth. In the adjustment gap, the terminal may fail to communicate with the base station. The adjustment gap cannot be greater than a predetermined adjustment gap. The terminal adjusts the radio frequency bandwidth of the terminal based on the adjustment gap.

In another possible design, a length and a location of the adjustment gap (Gap) may be configured by a network, may be actively determined by UE but a network is unknown, or may be determined by UE and then notified to a network.

In another possible design, the terminal obtains a subcarrier quantity, a subcarrier spacing, or a frame structure size of the sent signal after switching; and the terminal determines, based on the subcarrier quantity, the subcarrier spacing, or the frame structure size, a measurement time threshold for measuring the sent signal after switching.

In another possible design, after the frame structure size or the signal bandwidth is switched, the terminal needs to measure, at least once, the switched frame structure or the switched signal bandwidth.

In another possible design, the terminal obtains a quantity of switching times of the signal bandwidth; and the terminal determines, based on the quantity of switching times of the signal bandwidth, a measurement time threshold for measuring the sent signal after switching.

In another possible design, if a gap in which the terminal measures the switched signal bandwidth or the switched frame structure of the sent signal exceeds the measurement time threshold, measuring the switched signal bandwidth or the switched frame structure of the sent signal is stopped; or if a gap in which the terminal measures the switched signal bandwidth or the switched frame structure of the sent signal exceeds the measurement time threshold, the measurement report is sent to the base station; or if a gap in which the terminal measures the switched signal bandwidth or the switched frame structure of the sent signal exceeds the measurement time threshold, information indicating a measurement timeout or measurement failure is sent to the base station.

In another possible design, if the subcarrier quantity, the subcarrier spacing, or the frame structure size of the sent signal after switching decreases, the measurement time threshold decreases; or if the subcarrier quantity, the subcarrier spacing, or the frame structure size of the sent signal after switching increases, the measurement time threshold increases.

In another possible design, if the subcarrier spacing of the sent signal after switching changes but a measurement bandwidth of the sent signal after switching remains unchanged, the measurement time threshold remains unchanged.

In another possible design, if a radio frequency bandwidth of the terminal changes but the signal bandwidth or a frame structure of the sent signal remains unchanged, the measurement time threshold remains unchanged.

In another possible design, the switched signal bandwidth or the switched frame structure of the sent signal is measured based on measurement precision before switching.

According to a second aspect, an embodiment of this application provides a signal measurement method, including: sending, by a base station, a measurement indication to a terminal, where the measurement indication includes an indication that a signal bandwidth of a sent signal is switched, and the measurement indication is used to instruct the terminal to measure a switched signal bandwidth or a switched frame structure of the sent signal; and receiving, by the base station, a measurement report sent by the terminal, to realize measuring a signal with a changing bandwidth in a cellular mobile communications network.

In another possible design, the base station determines a measurement time threshold for measuring, by the terminal, the switched signal bandwidth or the switched frame structure of the sent signal; and if a gap in which the terminal measures the switched signal bandwidth or the switched frame structure of the sent signal exceeds the measurement time threshold, receiving the measurement report sent by the terminal is stopped.

In another possible design, the base station determines the measurement time threshold for measuring, by the terminal, the switched signal bandwidth or the switched frame structure of the sent signal; and if the gap in which the terminal measures the switched signal bandwidth or the switched frame structure of the sent signal exceeds the measurement time threshold, a measurement failure of the terminal is determined.

In another possible design, after receiving the measurement report sent by the terminal is stopped, the base station sends a query message to the terminal, where the query message is used to instruct the terminal to feed back a current state of the terminal.

In another possible design, before the sending, by a base station, a measurement indication to a terminal, signal indication information may be sent to the terminal, and the signal indication information includes an indication that a size of the bandwidth or a frame structure of the measured signal is switched.

According to a third aspect, an embodiment of this application provides a terminal. The terminal is configured to implement the method and the functions that are performed by the terminal in the first aspect. The terminal is implemented by using hardware/software. The hardware/software of the terminal includes units corresponding to the foregoing functions.

According to a fourth aspect, an embodiment of this application provides a base station. The base station is configured to implement the method and the functions that are performed by the base station in the second aspect. The base station is implemented by using hardware/software. The hardware/software of the base station includes units corresponding to the foregoing functions.

According to a fifth aspect, this application provides another terminal, including a processor, a memory, and a communications bus. The communications bus is configured to implement connection and communication between the processor and the memory, and the processor executes a program stored in the memory, to implement the steps in the signal measurement method provided in the first aspect.

According to a sixth aspect, this application provides another base station, including a processor, a memory, and a communications bus. The communications bus is configured to implement connection and communication between the processor and the memory, and the processor executes a program stored in the memory, to implement the steps in the signal measurement method provided in the second aspect.

According to a seventh aspect, an embodiment of this application provides a computer readable storage medium. The computer readable storage medium stores an instruction, and when the instruction is run on a computer, the computer is enabled to perform the signal measurement methods in the foregoing aspects.

According to an eighth aspect, an embodiment of this application provides a computer program product including an instruction. When the computer program product is run on a computer, the computer is enabled to perform the signal measurement methods in the foregoing aspects.

### BRIEF DESCRIPTION OF DRAWINGS

To describe the technical solutions in the embodiments of this application or in the background more clearly, the following briefly describes the accompanying drawings required for describing the embodiments of this application or the background.
FIG. 1 is a schematic structural diagram of signal measurement performed based on a fixed signal bandwidth according to a solution in the prior art;
FIG. 2 is a schematic architectural diagram of a signal measurement system according to an embodiment of this application;
FIG. 3 is a schematic flowchart of a signal measurement method according to an embodiment of this application;
FIG. 4 is a schematic display diagram of a type of signal switching according to an embodiment of this application;
FIG. 5 is a schematic display diagram of another type of signal switching according to an embodiment of this application;
FIG. 6 is a schematic display diagram of another type of signal switching according to an embodiment of this application;
FIG. 7 is a schematic structural diagram of a terminal according to an embodiment of this application;
FIG. 8 is a schematic structural diagram of a base station according to an embodiment of this application;
FIG. 9 is a schematic structural diagram of another terminal according to an embodiment of this application; and
FIG. 10 is a schematic structural diagram of another base station according to an embodiment of this application.

### DETAILED DESCRIPTION OF EMBODIMENTS

The following describes the embodiments of this application with reference to the accompanying drawings in the embodiments of this application.

FIG. 2 is a schematic architectural diagram of a signal measurement system according to an embodiment of this application. The signal measurement system includes a terminal and a base station. The terminal may be a device that provides a voice and/or data connection to a user, may be connected to a computing device such as a laptop computer or a desktop computer, or may be a standalone device such as a personal digital assistant (Personal Digital Assistant, PDA). The terminal may also be referred to as a system, a subscriber unit, a subscriber station, a mobile station, a mobile console, a remote station, an access point, a remote terminal, an access terminal, a user terminal, a user agent, or a user apparatus. The base station may be an access point, a NodeB, an evolved NodeB (Environment Bureau, eNB), or a 5G NodeB (Next generation NodeB, gNB), and is a device that communicates with a wireless terminal on an air interface by using one or more sectors and that is in an access network. By converting a received air interface frame into an IP packet, the base station may be used as a router between the wireless terminal and a remaining part of the access network. The access network may include an Internet Protocol network. The base station may further coordinate attribute management of the air interface.

FIG. 3 is a schematic flowchart of a signal measurement method according to an embodiment of this application. The method includes but is not limited to the following steps.
S301. A base station sends a measurement indication to a terminal. The measurement indication may include an indication that a signal bandwidth of a sent signal is switched. The signal bandwidth is a signal bandwidth that needs to be measured by the terminal or a bandwidth of a reference signal.
S302. When performing signal measurement, the terminal determines whether the signal bandwidth of the signal sent by the base station is switched.

In specific implementation, the terminal may determine, according to an indication that the signal bandwidth of the sent signal is switched, which is included in the measurement indication, whether the signal bandwidth of the signal sent by the base station is switched. Alternatively, after the terminal receives the signal sent by the base station, the terminal directly determines whether the signal bandwidth of the signal sent by the base station is switched.

S303. If determining that the signal bandwidth of the sent signal is switched, the terminal measures a switched signal bandwidth or a switched frame structure of the sent signal according to a preset rule or the measurement indication of the base station.

Optionally, if determining that the signal bandwidth of the sent signal is switched, the terminal may adjust a radio frequency bandwidth of the terminal; and then measure the switched signal bandwidth or the switched frame structure of the sent signal based on the adjusted radio frequency bandwidth. The radio frequency bandwidth is a capability with which the terminal can receive the signal sent by the base station. For example, most terminals in an LTE system have a capability of a 20 MHz of radio frequency bandwidth.

Further, optionally, the terminal may obtain an adjustment gap. The terminal adjusts the radio frequency bandwidth of the terminal based on the adjustment gap. In the adjustment gap, the terminal actively adjusts the radio frequency bandwidth. In the adjustment gap, the terminal may fail to communicate with the base station. The adjustment gap cannot be greater than a predetermined adjustment gap. A length and a location of the adjustment gap (Gap) may be configured by a network, may be actively determined by UE but unknown to a network, or may be determined by UE and then notified to a network. The adjustment gap (Gap) is a time period structure specially configured for the terminal to perform measurement. In the adjustment gap, the terminal may perform measurement without performing data communication. For example, for a definition of the gap, refer to a definition of the Gap in the protocol 3GPP TS36.133.

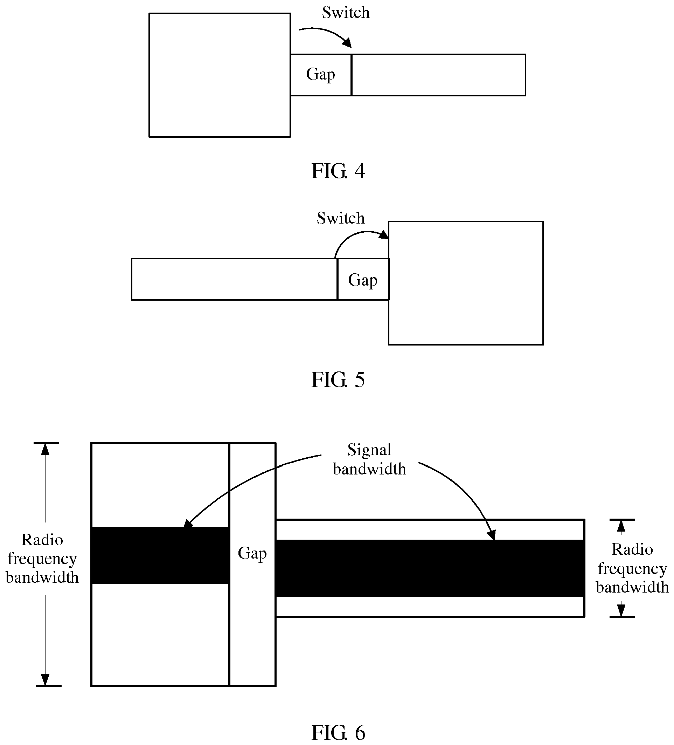

As shown in FIG. 4, FIG. 5, or FIG. 6, the signal bandwidth before switching is on the left, the switched signal bandwidth is on the right, and the adjustment gap is in the middle. The terminal needs to switch, after the adjustment gap (Gap), from measuring a signal before switching to measuring the signal after switching.

Optionally, the terminal obtains a subcarrier quantity, a subcarrier spacing, or a frame structure size of the sent signal after switching; and the terminal determines, based on the subcarrier quantity, the subcarrier spacing, or the frame structure size, a measurement time threshold for measuring the sent signal after switching. The measurement time threshold may be a length of a time from a moment at which the terminal receives the measurement indication of the base station to a moment at which a measurement report is sent, or may be a length of a time from a moment at which the base station sends the measurement indication to a moment at which the terminal sends the measurement report, which is not limited thereto.

Further, optionally, if the subcarrier quantity, the subcarrier spacing, or the frame structure size of the sent signal after switching decreases, the measurement time threshold decreases; or if the subcarrier quantity, the subcarrier spacing, or the frame structure size of the sent signal after switching increases, the measurement time threshold increases; or if the subcarrier spacing of the sent signal after switching changes but a measurement bandwidth of the sent signal after switching remains unchanged, the measurement time threshold remains unchanged.

As shown in FIG. 4, the signal bandwidth before switching is on the left, and the switched signal bandwidth is on the right. The signal bandwidth before switching is greater than the switched signal bandwidth, and therefore, a required measurement time threshold decreases. As shown in FIG. 5, the signal bandwidth before switching is on the left, and the switched signal bandwidth is on the right. The signal bandwidth before switching is less than the switched signal bandwidth, and therefore, a required measurement time threshold increases.

Further, if the radio frequency bandwidth of the terminal changes but the signal bandwidth or a frame structure of the sent signal remains unchanged, the measurement time threshold remains unchanged.

As shown in FIG. 6, the signal bandwidth and the radio frequency bandwidth before switching are on the left, and the switched signal bandwidth and the switched radio frequency bandwidth are on the right. Although the radio frequency bandwidth before switching is greater than the switched radio frequency bandwidth, the signal bandwidth before switching is the same as the switched signal bandwidth, and the measurement time threshold remains unchanged.

Optionally, after the signal bandwidth or the frame structure size of the sent signal is switched, the terminal needs to measure, at least once, the switched frame structure or the switched signal bandwidth.

Further, optionally, the terminal obtains a quantity of switching times of the signal bandwidth; and the terminal obtains, based on the quantity of switching times of the signal bandwidth, a measurement time threshold for measuring the sent signal after switching. If the quantity of switching times of the signal bandwidth is greater, a greater measurement time threshold is required; or if the quantity of switching times of the signal bandwidth is smaller, a smaller measurement time threshold is required.

Optionally, the switched signal bandwidth or the switched frame structure of the sent signal may be measured based on measurement precision before switching.

Optionally, after the measurement time threshold is determined, if a gap in which the terminal measures the switched signal bandwidth or the switched frame structure of the sent signal exceeds the measurement time threshold, measuring the switched signal bandwidth or the switched frame structure of the sent signal is stopped; or if a gap in which the terminal measures the switched signal bandwidth or the switched frame structure of the sent signal exceeds the measurement time threshold, the measurement report is sent to the base station; or if a gap in which the terminal measures the switched signal bandwidth or the switched frame structure of the sent signal exceeds the measurement time threshold, information indicating a measurement timeout or measurement failure is sent to the base station.

S304. The terminal sends the measurement report to the base station.

In specific implementation, the base station may first determine the measurement time threshold for measuring, by the terminal, the switched signal bandwidth or the switched frame structure of the sent signal, and after receiving the measurement report sent by the terminal, if the gap in which the terminal measures the switched signal bandwidth or the switched frame structure of the sent signal exceeds the measurement time threshold, receiving the measurement report sent by the terminal is stopped. Alternatively, if the gap in which the terminal measures the switched signal bandwidth or the switched frame structure of the sent signal exceeds the measurement time threshold, it is determined that the terminal fails to measure the signal. Alternatively, if the gap in which the terminal measures the switched signal bandwidth or the switched frame structure of the sent signal does not exceed the measurement time threshold, it is determined that the terminal succeeds in measuring the signal.

Optionally, after that receiving the measurement report sent by the terminal is stopped, the base station may send a query message to the terminal, and the query message is used to instruct the terminal to feed back a current state of the terminal. After receiving the query message, the terminal feeds back the current state of the terminal to the base station.

The method in the embodiments of this application is described above in detail. The following provides an apparatus according to an embodiment of this application.

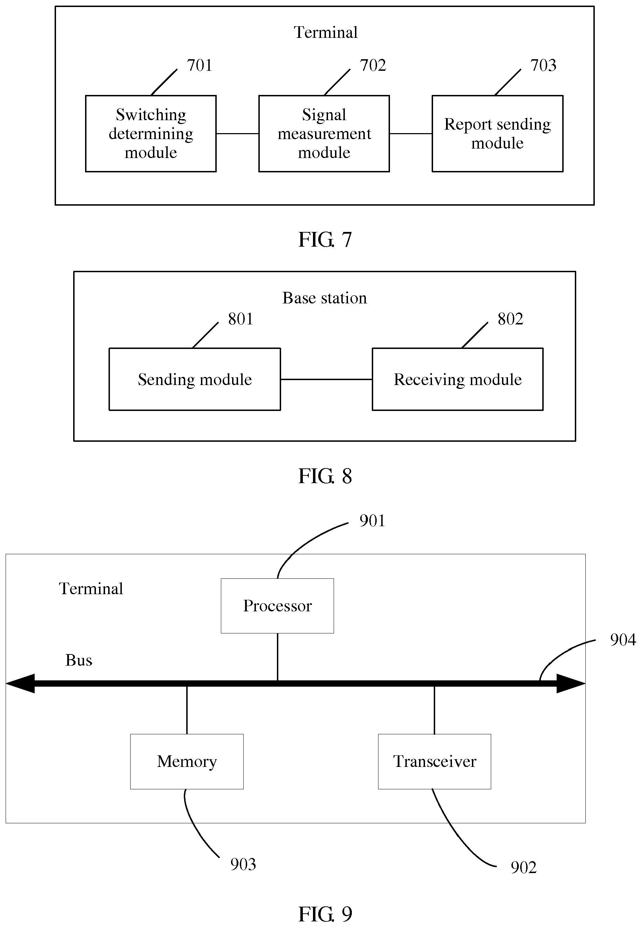

FIG. 7 is a schematic structural diagram of a terminal according to an embodiment of this application. The terminal may include a switching determining module 701, a signal measurement module 702, and a switching determining module 703. The modules are described in detail below.

The switching determining module 701 is configured to: when signal measurement is performed, determine whether a signal bandwidth of a signal sent by a base station is switched.

The signal measurement module 702 is configured to, if it is determined that the signal bandwidth of the sent signal is switched, measure a switched signal bandwidth or a switched frame structure of the sent signal according to a preset rule or a measurement indication of the base station.

The report sending module 703 is configured to send a measurement report to the base station.

Optionally, the signal measurement module 702 is specifically configured to: adjust a radio frequency bandwidth of the terminal; and measure the switched signal bandwidth or the switched frame structure of the sent signal based on the adjusted radio frequency bandwidth.

Optionally, the signal measurement module 702 is specifically configured to: obtain an adjustment gap, where the adjustment gap is determined by the terminal or configured by a network; and adjust the radio frequency bandwidth of the terminal based on the adjustment gap.

Optionally, the signal measurement module 702 is specifically configured to: obtain a subcarrier quantity, a subcarrier spacing, or a frame structure size of the sent signal after switching; and determine, based on the subcarrier quantity, the subcarrier spacing, or the frame structure size, a measurement time threshold for measuring the sent signal after switching.

Optionally, the signal measurement module 702 is specifically configured to: obtain a quantity of switching times of the signal bandwidth; and determine, based on the quantity of switching times of the signal bandwidth, a measurement time threshold for measuring the sent signal after switching.

Optionally, the signal measurement module 702 is specifically configured to: if a gap in which the terminal measures the switched signal bandwidth or the switched frame structure of the sent signal exceeds the measurement time threshold, stop measuring the switched signal bandwidth or the switched frame structure of the sent signal; or if a gap in which the terminal measures the switched signal bandwidth or the switched frame structure of the sent signal exceeds the measurement time threshold, send the measurement report to the base station; or if a gap in which the terminal measures the switched signal bandwidth or the switched frame structure of the sent signal exceeds the measurement time threshold, send information indicating a measurement timeout or measurement failure to the base station.

Optionally, the signal measurement module 702 is specifically configured to implement the following: If the subcarrier quantity, the subcarrier spacing, or the frame structure size of the sent signal after switching decreases, the measurement time threshold decreases; or if the subcarrier quantity, the subcarrier spacing, or the frame structure size of the sent signal after switching increases, the measurement time threshold increases; or if the subcarrier spacing of the sent signal after switching changes but a measurement bandwidth of the sent signal after switching remains unchanged, the measurement time threshold remains unchanged.

Optionally, the signal measurement module 702 is specifically configured to implement the following: If a radio frequency bandwidth of the terminal changes but the signal bandwidth or a frame structure of the sent signal remains unchanged, the measurement time threshold remains unchanged.

Optionally, the signal measurement module 702 is specifically configured to measure the switched signal bandwidth or the switched frame structure of the sent signal based on measurement precision before switching.

It should be noted that for implementation of each module, reference may be made to corresponding descriptions with reference to the method embodiment shown in FIG. 3, to perform the method and the functions performed by the terminal in the foregoing embodiment.

FIG. 8 is a schematic structural diagram of a base station according to an embodiment of this application. The base station may include a sending module 801 and a receiving module 802. The units are described in detail below.

The sending module 801 is configured to send a measurement indication to a terminal, where the measurement indication includes an indication that a signal bandwidth of a sent signal is switched, and the measurement indication is used to instruct the terminal to measure a switched signal bandwidth or a switched frame structure of the sent signal.

The receiving module 802 is configured to receive a measurement report sent by the terminal.

Optionally, the receiving module 802 is further configured to: determine a measurement time threshold for measuring, by the terminal, the switched signal bandwidth or the switched frame structure of the sent signal; and if a gap in which the terminal measures the switched signal bandwidth or the switched frame structure of the sent signal exceeds the measurement time threshold, stop receiving the measurement report sent by the terminal.

Optionally, the sending module 801 is further configured to send a query message to the terminal, where the query message is used to instruct the terminal to feed back a current state of the terminal.

It should be noted that for implementation of each module, reference may be made to corresponding descriptions with reference to the method embodiment shown in FIG. 3, to perform the method and the functions performed by the base station in the foregoing embodiment.

FIG. 9 is a schematic structural diagram of another terminal according to this application. As shown in the figure, the terminal may include at least one processor 901 (for example, a CPU), at least one communications interface 902, at least one memory 903, and at least one communications bus 904. The communications bus 904 is configured to implement connection and communication between these components. The communications interface 902 in the device in this embodiment of this application is configured to perform signaling or data communication with another node device. The memory 903 may be a high-speed RAM memory, or may be a non-volatile memory (non-volatile memory), for example, at least one magnetic disk memory. Optionally, the memory 903 may alternatively be at least one storage apparatus far away from the foregoing processor 901. The memory 903 stores a group of program code, and the processor 901 executes a program that is stored in the memory 903 and that is executed by the foregoing terminal.

The processor is configured to: when signal measurement is performed, determine whether a signal bandwidth of a signal sent by a base station is switched;
if it is determined that the signal bandwidth of the sent signal is switched, measure a switched signal bandwidth or a switched frame structure of the sent signal according to a preset rule or a measurement indication of the base station; and
send a measurement report to the base station.

Further, the processor may cooperate with the memory and the communications interface, to perform an operation performed by the terminal in the foregoing embodiment of this application.

It should be noted that a virtual network device may be implemented in this embodiment of this application based on a general purpose physical server and with reference to a network functions virtualization (Network Function Virtualization, NFV) technology; the terminal may be a virtual machine (English: Virtual Machine, VM) running a program that is used for signal measurement; and the virtual machine is deployed on a hardware device (for example, a physical server). The virtual machine is a complete computer system that is simulated by using software, has a function of a complete hardware system, and runs in a completely isolated environment.

It should be noted that an embodiment of this application provides a computer readable storage medium. The computer readable storage medium stores an instruction, and when the instruction is run on a computer, the computer is enabled to perform the signal measurement methods in the foregoing aspects.

It should be noted that an embodiment of this application provides a computer program product including an instruction. When the computer program product is run on a computer, the computer is enabled to perform the signal measurement methods in the foregoing aspects.

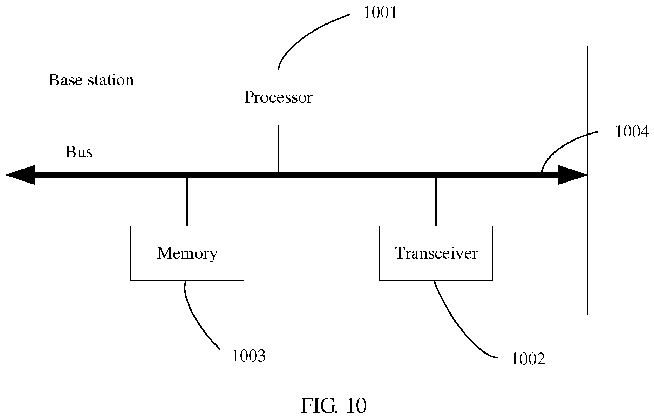

FIG. 10 is a schematic structural diagram of another base station according to this application. As shown in the figure, the base station may include at least one processor 1001 (for example, a CPU), at least one communications interface 1002, at least one memory 1003, and at least one communications bus 1004. The communications bus 1004 is configured to implement connection and communication between these components. The communications interface 1002 of the device in this embodiment of this application is configured to perform signaling or data communication with another node device. The memory 1003 may be a high-speed RAM memory, or may be a non-volatile memory (non-volatile memory), for example, at least one magnetic disk memory. Optionally, the memory 1003 may alternatively be at least one storage apparatus far away from the foregoing processor 1001. The memory 1003 stores a group of program code, and the processor 1001 executes a program that is stored in the memory 1003 and that is executed by the foregoing terminal.

The processor is configured to: send a measurement indication to a terminal, where the measurement indication includes an indication that a signal bandwidth of a sent signal is switched, and the measurement indication is used to instruct the terminal to measure a switched signal bandwidth or a switched frame structure of the sent signal; and
receive a measurement report sent by the terminal.

Further, the processor may cooperate with the memory and the communications interface, to perform an operation performed by the base station in the foregoing embodiment of this application.

It should be noted that a virtual network device may be implemented in this embodiment of this application based on a general purpose physical server and with reference to a network functions virtualization (Network Function Virtualization, NFV) technology; the base station may be a virtual machine (English: Virtual Machine, VM) running a program that is used for signal measurement; and the virtual machine is deployed on a hardware device (for example, a physical server). The virtual machine is a complete computer system that is simulated by using software, has a function of a complete hardware system, and runs in a completely isolated environment.

It should be noted that an embodiment of this application provides a computer readable storage medium. The computer readable storage medium stores an instruction, and when the instruction is run on a computer, the computer is enabled to perform the signal measurement methods in the foregoing aspects.

It should be noted that an embodiment of this application provides a computer program product including an instruction. When the computer program product is run on a computer, the computer is enabled to perform the signal measurement methods in the foregoing aspects.

A person of ordinary skill in the art may understand that all or some of the processes of the methods in the foregoing embodiments may be implemented by a computer program instructing related hardware. The program may be stored in a computer readable storage medium. When the program is run, the processes of foregoing method embodiments are performed. The foregoing storage medium includes: any medium that can store program code, such as a ROM, a random access memory (RAM), a magnetic disk, or a compact disc.

## Claims

1. A signal measurement method, wherein the method comprises:
when performing signal measurement, determining, by a terminal, whether a signal bandwidth of a signal sent by a base station is switched;
if determining that the signal bandwidth of the sent signal is switched, measuring, by the terminal, a switched signal bandwidth or a switched frame structure of the sent signal according to a preset rule or a measurement indication of the base station; and
sending, by the terminal, a measurement report to the base station.

2. The method according to claim 1, wherein the measuring, by the terminal, a switched signal bandwidth or a switched frame structure of the sent signal according to a preset rule or a measurement indication of the base station comprises:
adjusting, by the terminal, a radio frequency bandwidth of the terminal; and
measuring, by the terminal, the switched signal bandwidth or the switched frame structure of the sent signal based on the adjusted radio frequency bandwidth.

3. The method according to claim 2, wherein the adjusting, by the terminal, a radio frequency bandwidth of the terminal comprises:
obtaining, by the terminal, an adjustment gap, wherein the adjustment gap is determined by the terminal or configured by a network; and
adjusting, by the terminal, the radio frequency bandwidth of the terminal based on the adjustment gap.

4. The method according to claim 1, wherein the measuring, by the terminal, a switched signal bandwidth or a switched frame structure of the sent signal according to a preset rule or a measurement indication of the base station comprises:
obtaining, by the terminal, a subcarrier quantity, a subcarrier spacing, or a frame structure size of the sent signal after switching; and
determining, by the terminal based on the subcarrier quantity, the subcarrier spacing, or the frame structure size, a measurement time threshold for measuring the sent signal after switching.

5. The method according to claim 1, wherein the measuring, by the terminal, a switched signal bandwidth or a switched frame structure of the sent signal according to a preset rule or a measurement indication of the base station comprises:
obtaining, by the terminal, a quantity of switching times of the signal bandwidth; and
determining, by the terminal based on the quantity of switching times of the signal bandwidth, a measurement time threshold for measuring the sent signal after switching.

6. The method according to claim 4 or 5, wherein the measuring, by the terminal, a switched signal bandwidth or a switched frame structure of the sent signal according to a preset rule or a measurement indication of the base station comprises:
if a gap in which the terminal measures the switched signal bandwidth or the switched frame structure of the sent signal exceeds the measurement time threshold, stopping measuring the switched signal bandwidth or the switched frame structure of the sent signal; or
if a gap in which the terminal measures the switched signal bandwidth or the switched frame structure of the sent signal exceeds the measurement time threshold, sending the measurement report to the base station; or
if a gap in which the terminal measures the switched signal bandwidth or the switched frame structure of the sent signal exceeds the measurement time threshold, sending information indicating a measurement timeout or measurement failure to the base station.

7. The method according to claim 4, wherein the determining, by the terminal based on the subcarrier quantity, the subcarrier spacing, or the frame structure size, a measurement time threshold for measuring the sent signal after switching comprises the following:
if the subcarrier quantity, the subcarrier spacing, or the frame structure size of the sent signal after switching decreases, the measurement time threshold decreases; or
if the subcarrier quantity, the subcarrier spacing, or the frame structure size of the sent signal after switching increases, the measurement time threshold increases; or
if the subcarrier spacing of the sent signal after switching changes but the signal bandwidth of the sent signal after switching remains unchanged, the measurement time threshold remains unchanged.

8. The method according to claim 4, wherein the determining, by the terminal based on the subcarrier quantity, the subcarrier spacing, or the frame structure size, a measurement time threshold for measuring the sent signal after switching comprises the following:
if a radio frequency bandwidth of the terminal changes but the signal bandwidth or a frame structure of the sent signal remains unchanged, the measurement time threshold remains unchanged.

9. The method according to any one of claims 1 to 8, wherein the measuring, by the terminal, a switched signal bandwidth or a switched frame structure of the sent signal according to a preset rule or a measurement indication of the base station comprises:
measuring the switched signal bandwidth or the switched frame structure of the sent signal based on measurement precision before switching.

10. A signal measurement method, wherein the method comprises:
sending, by a base station, a measurement indication to a terminal, wherein the measurement indication comprises an indication that a signal bandwidth of a sent signal is switched, and the measurement indication is used to instruct the terminal to measure a switched signal bandwidth or a switched frame structure of the sent signal; and
receiving, by the base station, a measurement report sent by the terminal.

11. The method according to claim 10, wherein the receiving, by the base station, a measurement report sent by the terminal comprises:
determining, by the base station, a measurement time threshold for measuring, by the terminal, the switched signal bandwidth or the switched frame structure of the sent signal; and
if a gap in which the terminal measures the switched signal bandwidth or the switched frame structure of the sent signal exceeds the measurement time threshold, stopping receiving the measurement report sent by the terminal.

12. The method according to claim 11, wherein after the stopping receiving the measurement report sent by the terminal, the method further comprises:
sending, by the base station, a query message to the terminal, wherein the query message is used to instruct the terminal to feed back a current state of the terminal.

13. A terminal, wherein the method comprises:
a switching determining module, configured to: when signal measurement is performed, determine whether a signal bandwidth of a signal sent by a base station is switched;
a signal measurement module, configured to: if it is determined that the signal bandwidth of the sent signal is switched, measure a switched signal bandwidth or a switched frame structure of the sent signal according to a preset rule or a measurement indication of the base station; and
a report sending module, configured to send a measurement report to the base station.

14. The terminal according to claim 13, wherein the signal measurement module is specifically configured to:
adjust a radio frequency bandwidth of the terminal; and
measure the switched signal bandwidth or the switched frame structure of the sent signal based on the adjusted radio frequency bandwidth.

15. The terminal according to claim 14, wherein the signal measurement module is specifically configured to:
obtain an adjustment gap, wherein the adjustment gap is determined by the terminal or configured by a network; and
adjust the radio frequency bandwidth of the terminal based on the adjustment gap.

16. The terminal according to claim 13, wherein the signal measurement module is specifically configured to:
obtain a subcarrier quantity, a subcarrier spacing, or a frame structure size of the sent signal after switching; and
determine, based on the subcarrier quantity, the subcarrier spacing, or the frame structure size, a measurement time threshold for measuring the sent signal after switching.

17. The terminal according to claim 13, wherein the signal measurement module is specifically configured to:
obtain a quantity of switching times of the signal bandwidth; and
determine, based on the quantity of switching times of the signal bandwidth, a measurement time threshold for measuring the sent signal after switching.

18. The terminal according to claim 16 or 17, wherein the signal measurement module is specifically configured to:
if a gap in which the terminal measures the switched signal bandwidth or the switched frame structure of the sent signal exceeds the measurement time threshold, stop measuring the switched signal bandwidth or the switched frame structure of the sent signal; or
if a gap in which the terminal measures the switched signal bandwidth or the switched frame structure of the sent signal exceeds the measurement time threshold, send the measurement report to the base station; or
if a gap in which the terminal measures the switched signal bandwidth or the switched frame structure of the sent signal exceeds the measurement time threshold, send information indicating a measurement timeout or measurement failure to the base station.

19. The terminal according to claim 16, wherein the signal measurement module is specifically configured to implement the following:
if the subcarrier quantity, the subcarrier spacing, or the frame structure size of the sent signal after switching decreases, the measurement time threshold decreases; or
if the subcarrier quantity, the subcarrier spacing, or the frame structure size of the sent signal after switching increases, the measurement time threshold increases; or
if the subcarrier spacing of the sent signal after switching changes but the signal bandwidth of the sent signal after switching remains unchanged, the measurement time threshold remains unchanged.

20. The terminal according to claim 16, wherein the signal measurement module is specifically configured to implement the following:
if a radio frequency bandwidth of the terminal changes but the signal bandwidth or a frame structure of the sent signal remains unchanged, the measurement time threshold remains unchanged.

21. The terminal according to any one of claims 13 to 20, wherein the signal measurement module is specifically configured to measure the switched signal bandwidth or the switched frame structure of the sent signal based on measurement precision before switching.

22. Abase station, wherein the base station comprises:
a sending module, configured to send a measurement indication to a terminal, wherein the measurement indication comprises an indication that a signal bandwidth of a sent signal is switched, and the measurement indication is used to instruct the terminal to measure a switched signal bandwidth or a switched frame structure of the sent signal; and
a receiving module, configured to receive a measurement report sent by the terminal.

23. The base station according to claim 22, wherein the receiving module is further configured to: determine a measurement time threshold for measuring, by the terminal, the switched signal bandwidth or the switched frame structure of the sent signal; and if a gap in which the terminal measures the switched signal bandwidth or the switched frame structure of the sent signal exceeds the measurement time threshold, stop receiving the measurement report sent by the terminal.

24. The base station according to claim 23, wherein the sending module is further configured to send a query message to the terminal, wherein the query message is used to instruct the terminal to feed back a current state of the terminal.

25. A terminal, comprising a memory, a communications bus, and a processor, wherein the memory is configured to store program code, and the processor is configured to invoke the program code, to perform the following operations:
when signal measurement is performed, determining whether a signal bandwidth of a signal sent by a base station is switched;
if it is determined that the signal bandwidth of the sent signal is switched, measuring, a switched signal bandwidth or a switched frame structure of the sent signal according to a preset rule or a measurement indication of the base station; and
sending a measurement report to the base station.

26. Abase station, comprising a memory, a communications bus, and a processor, wherein the memory is configured to store program code, and the processor is configured to invoke the program code, to perform the following operations:
sending a measurement indication to a terminal, wherein the measurement indication comprises an indication that a signal bandwidth of a sent signal is switched, and the measurement indication is used to instruct the terminal to measure a switched signal bandwidth or a switched frame structure of the sent signal; and
receiving a measurement report sent by the terminal.
